# EUROPEAN PATENT APPLICATION

(11) **EP 3 800 930 A1**
(43) Date of publication of application: **07.04.2021**
(21) Application number: 19201075.9
(22) Date of filing: 02.10.2019
(51) Int. Cl.: H04W 28/02, H04W 28/16

(54) **COMMUNICATION NETWORK ARRANGEMENT AND METHOD FOR HANDLING REGISTRATION AND/OR SESSION REQUESTS**

(71) Applicant: NTT DoCoMo, Inc., Tokyo 100-6150 (JP)
(72) Inventor: THAKOLSRI, Srisakul, 80687 München (DE); SAMA, Malla Reddy, 80687 München (DE)
(74) Representative: Viering, Jentschura & Partner mbB Patent- und Rechtsanwälte

(57) **Abstract**

According to an embodiment, a communication network arrangement is described comprising one or more network slices of a communication network, a quota monitoring component and a management component, wherein the quota monitoring component is configured to detect whether a quota which limits the maximum number of mobile terminals registered in a network slice and/or the maximum number of sessions provided in the network slice has been reached, the quota monitoring component is configured to notify the management component if the quota has been reached and the management component is configured to reject a request of a mobile terminal for registration to the network slice or establishment of a session in the network slice if the quota has been reached.

## Description

The present disclosure relates to communication network arrangements and method for handling registration and/or session requests.

In a communication network such as a 5G mobile radio communication network it may be desirable to introduce limitations or quota with respect to the number of mobile terminals registered, e.g. for a certain network slice, or the number of sessions established, e.g. by means of a certain network slice. This may for example be used to prevent overload and thus to ensure a certain performance of the communication network. Corresponding approaches which allow enforcing such quota are desirable.

According to an embodiment, a communication network arrangement is provided comprising one or more network slices, a quota monitoring component and a management component, wherein the quota monitoring component is configured to detect whether a quota which limits the maximum number of mobile terminals registered in a network slice and/or the maximum number of sessions provided in the network slice has been reached, the quota monitoring component is configured to notify the management component if the quota has been reached and the management component is configured to reject a request of a mobile terminal for registration to the network slice or for establishment of a session in the network slice if the quota has been reached.

According to a further embodiment, a method for handling registration and/or session requests according to the communication network arrangement described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system, for example configured according to 5G (Fifth Generation) as specified by 3GPP (Third Generation Partnership Project).
- Figure 2: shows a radio communication system having network slice quota.
- Figure 3: illustrates the handling of a network slice quota regarding the maximum number of UEs (User Equipments) allowed to be registered to a network slice of a radio communication system.
- Figure 4: illustrates the handling of a network slice quota regarding the maximum number of PDU (Packet Data Unit) sessions allowed to be provided by a network slice of a radio communication system.
- Figure 5: shows a flow diagram illustrating an OAM (Operation, Administration and Maintenance) service enhancement to support a 3^{rd} party for configuring/updating network slice quota.
- Figure 6: shows a flow diagram illustrating an OAM service enhancement to allow network slice quota information subscription by a 5GC network or RAN (radio access network).
- Figure 7: shows a flow diagram illustrating an OAM service enhancement to allow subscription for notification when a network slice quota has been reached.
- Figure 8: shows a flow diagram illustrating an NWDAF (Network Data Analytics Function) service enhancement to allow subscription for notification when a network slice quota has been reached.
- Figure 9: shows a flow diagram illustrating the usage of a quota limit reach rejection cause for a registration reject message.
- Figure 10: shows a flow diagram illustrating the usage of a quota limit reach rejection cause for a PDU establishment reject message.
- Figure 11: shows a flow diagram illustrating addressing a racing issue in case of two UEs requesting registration via different AMFs (Access and Mobility Management Functions).
- Figure 12: shows a flow diagram illustrating an example of an NWDAF (Network Data Analytics Function) collecting information from an AMF to know about the current number of UEs registered in a particular network slice (or particular network slices) in a specified area.
- Figure 13: shows a flow diagram illustrating an example of an NWDAF collecting info from an OAM to know about the current number of UEs for one or more particular network slices in the whole network.
- Figure 14: shows a flow diagram illustrating an example of an NWDAF collecting information from an SMF to know about the current number of PDU sessions provided by means of a particular network slice (or particular network slices).
- Figure 15: shows a flow diagram illustrating an example of an NWDAF collecting info from an OAM to know about the current number of PDU sessions provided by one or more particular network slices in the whole PLMN.
- Figure 16: shows a communication network arrangement according to an embodiment.
- Figure 17: shows a flow diagram illustrating a method for handling registration and/or session requests according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a communication network arrangement comprising one or more network slices of a communication network, a quota monitoring component and a management component, wherein the quota monitoring component is configured to detect whether a quota which limits the maximum number of mobile terminals registered in a network slice and/or the maximum number of sessions provided in the network slice has been reached, the quota monitoring component is configured to notify the management component if the quota has been reached and the management component is configured to reject a request of a mobile terminal for registration to the network slice or establishment of a session in the network slice if the quota has been reached.
Example 2 is the communication network arrangement of Example 1, wherein the management component is part of a core network of the communication network.
Example 3 is the communication network arrangement of Example 1 or 2, wherein the communication network is a 5G mobile communication network.
Example 4 is the communication network arrangement of any one of Examples 1 to 3, wherein the number of sessions is a number of packet data unit sessions.
Example 5 is the communication network arrangement of any one of Examples 1 to 4, further comprising a data acquisition component configured to acquire information about a current number of mobile terminals registered in the network slice and/or a current number of sessions provided in the network slice.
Example 6 is the communication network arrangement of Example 5, wherein the quota monitoring component is configured to detect whether the quota has been reached based on a current number of mobile terminals registered in the network slice and/or a current number of sessions provided in the network slice.
Example 7 is the communication network arrangement of Example 5 or 6, wherein the data acquisition component and the quota monitoring component are implemented by the same network component.
Example 8 is the communication network arrangement of any one of Examples 5 to 7, wherein the data acquisition component is a Network Data Analytics Function or an Operation, Administration and Maintenance component or a Policy Control Function.
Example 9 is the communication network arrangement of any one of Examples 1 to 8, wherein the quota monitoring component is a Network Data Analytics Function or an Operation, Administration and Maintenance component or a Policy Control Function.
Example 10 is the communication network arrangement of any one of Examples 1 to 9, wherein the quota limits the maximum number of mobile terminals registered in the network slice and the management component comprises an Access and Mobility Management Function.
Example 11 is the communication network arrangement of any one of Examples 1 to 10, wherein the quota limits the maximum number of sessions provided in the network slice and the management component comprises a Session Management Function.
Example 12 is the communication network arrangement of any one of Examples 1 to 11, wherein the quota monitoring component is configured to notify the management component via a Policy Control Function.
Example 13 is the communication network arrangement of any one of Examples 1 to 12, comprising a storage component configured to store a specification of the quota.
Example 14 is the communication network arrangement of Example 13, wherein the storage component is configured to allow configuration of the quota by a third party network component.
Example 15 is the communication network arrangement of Example 13 or 14, wherein the storage component is an Operation, Administration and Maintenance component.
Example 16 is the communication network arrangement of any one of Examples 12 to 15, wherein the storage component and a data acquisition component configured to acquire information about a current number of mobile terminals registered in the network slice and/or a current number of sessions provided in the network slice are implemented by the same network component.
Example 17 is the communication network arrangement of any one of Examples 1 to 16, wherein the management component is configured to request from the quota monitoring component to be notified when the quota has been reached.
Example 18 is the communication network arrangement of Example 17, wherein the management component is configured to request from the quota monitoring component to be notified when the quota has been reached by means of a notification service subscription.
Example 19 is the communication network arrangement of any one of Examples 1 to 18, comprising a plurality of management components configured receive requests for registration to the network slice or establishment of a session form multiple mobile terminals and further comprising a control component configured to check, in case of a plurality of unanswered requests for registration to the network slice or establishment of a session, whether the requests may be only partially fulfilled because of the quota being reached and, if the requests can only be partially fulfilled, control one or more of the management components to reject a request received by the management components.
Example 20 is the communication network arrangement of Example 19, wherein the control component is configured to select one or more mobile terminals from which the plurality of management components have received requests for registration to the network slice or establishment of a session and to control the one or more of the management components to reject a the requests of the selected one or more mobile terminals.
Example 21 is the communication network arrangement of Example 20, wherein the control component is configured to select the one or more mobile terminals based on an operator policy and/or based on the UE's subscription information indicating the priority ranking of the one or more mobile terminals.
Example 22 is the communication network arrangement of any one of Examples 1 to 21, wherein the management component is configured to reject the request of the mobile terminal by means of transmission of a message to the mobile terminal including a back-off time during which the mobile terminal may not request registration to the network slice or establishment of a session in the network slice.
Example 23 is the communication network arrangement of any one of Examples 1 to 22, wherein the quota limits the maximum number of mobile terminals registered in the network slice and/or the maximum number of sessions provided in the network slice for mobile terminals located in a pre-defined geographic sub-area of a coverage area of the network slice and wherein the management component is configured to reject a request of a mobile terminal for registration to the network slice or establishment of a session in the network slice if the quota has been reached and the mobile terminal is located in the sub-area.
Example 24 is a method for handling registration and/or session requests comprising detecting whether a quota which limits the maximum number of mobile terminals registered in a network slice and/or the maximum number of sessions provided in the network slice has been reached, notifying a management component if the quota has been reached and the management component rejecting a request of a mobile terminal for registration to the network slice or establishment of a session in the network slice if the quota has been reached.
Example 25 is the method of Example 24, wherein the management component is part of a core network of the communication network.
Example 26 is the method of Example 24 or 25, wherein the communication network is a 5G mobile communication network.
Example 27 is the method of any one of Examples 24 to 26, wherein the number of sessions is a number of packet data unit sessions.
Example 28 is the method of any one of Examples 24 to 27, further comprising acquiring information about a current number of mobile terminals registered in the network slice and/or a current number of sessions provided in the network slice.
Example 29 is the method of Example 28, comprising detecting whether the quota has been reached based on a current number of mobile terminals registered in the network slice and/or a current number of sessions provided in the network slice.
Example 30 is the method of Example 28 or 29, comprising performing the detecting and the acquiring by the same network component.
Example 31 is the method of any one of Examples 28 to 30, wherein acquiring is performed by a Network Data Analytics Function or an Operation, Administration and Maintenance component or a Policy Control Function.
Example 32 is the method of any one of Examples 24 to 31, wherein the detecting is performed by a Network Data Analytics Function or an Operation, Administration and Maintenance component or a Policy Control Function.
Example 33 is the method of any one of Examples 24 to 32, wherein the quota limits the maximum number of mobile terminals registered in the network slice and the management component comprises an Access and Mobility Management Function.
Example 34 is the method of any one of Examples 24 to 33, wherein the quota limits the maximum number of sessions provided in the network slice and the management component comprises a Session Management Function.
Example 35 is the method of any one of Examples 24 to 34, comprising notifying the management component via a Policy Control Function.
Example 36 is the method of any one of Examples 24 to 35, comprising storing a specification of the quota.
Example 37 is the method of Example 36, comprising configuring the quota by a third party network component.
Example 38 is the method of Example 36 or 37, comprising storing the specification of the quota by an Operation, Administration and Maintenance component.
Example 39 is the method of any one of Examples 35 to 38, comprising storing the specification of the quota and performing acquiring information about a current number of mobile terminals registered in the network slice and/or a current number of sessions provided in the network slice by the same network component.
Example 40 is the method of any one of Examples 24 to 39, wherein the management component requests to be notified when the quota has been reached.
Example 41 is the method of Example 40, wherein the management component requests to be notified when the quota has been reached by means of a notification service subscription.
Example 42 is the method of any one of Examples 24 to 41, comprising a plurality of management components receiving requests for registration to the network slice or establishment of a session form multiple mobile terminals and checking, in case of a plurality of unanswered requests for registration to the network slice or establishment of a session, whether the requests may be only partially fulfilled because of the quota being reached and, if the requests can only be partially fulfilled, controlling one or more of the management components to reject a request received by the management components.
Example 43 is the method of Example 42, comprising selecting one or more mobile terminals from which the plurality of management components have received requests for registration to the network slice or establishment of a session and controlling the one or more of the management components to reject a the requests of the selected one or more mobile terminals.
Example 44 is the method of Example 43, comprising selecting the one or more mobile terminals based on an operator policy and/or based on the UE's subscription information indicating the priority ranking of the one or more mobile terminals.
Example 45 is the method of any one of Examples 24 to 44, comprising rejecting the request of the mobile terminal by means of transmission of a message to the mobile terminal including a back-off time during which the mobile terminal may not request registration to the network slice or establishment of a session in the network slice.
Example 46 is the method of any one of Examples 24 to 45, wherein the quota limits the maximum number of mobile terminals registered in the network slice and/or the maximum number of sessions provided in the network slice for mobile terminals located in a pre-defined geographic sub-area of a coverage area of the network slice and the method comprises rejecting a request of a mobile terminal for registration to the network slice or establishment of a session in the network slice if the quota has been reached and the mobile terminal is located in the sub-area.

According to further embodiments, a computer program and a computer readable medium comprising instructions, which, when executed by a computer, make the computer perform the method of any one of Examples 1 to 23, are provided.

It should be noted that one or more of the features of any of the examples above may be combined with any one of the other examples.

In the following, various examples will be described in more detail.

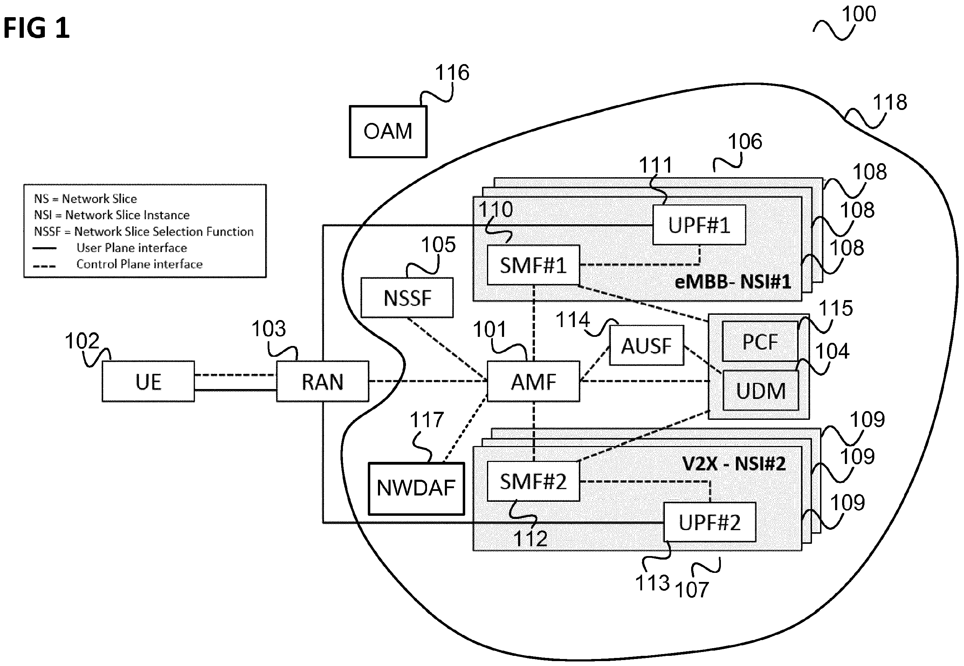

Figure 1 shows a radio communication system 100, for example configured according to 5G (Fifth Generation) as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further comprises an AUSF (Authentication Server Function) 114 and a PCF (Policy Control Function) 115.

The core network 118 may have multiple network slices 106, 107 and for each network slice 106, 107, the operator (also referred to MNO for Mobile Network Operator) may create multiple network slice instances (NSIs) 108, 109. For example, the core network 118 comprises a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 comprises a first Session Management Function (SMF) 110 and a first User Plane Function (UPF) 111 and each instance 109 of the second core network slice 107 comprises a second Session Management Function (SMF) 112 and a second User Plane Function (UPF) 113. The SMFs 110, 112 are for handling PDU (Packet Data Unit) sessions, i.e. for creating, updating and removing Protocol Data Unit (PDU) sessions and managing session context with the User Plane Function (UPF).

An S-NSSAI (Single Network Slice Selection Assistance information) identifies a network slice and is comprised of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The core network 118 may further include a Network Data Analytics Function (NWDAF) 117. The NWDAF is responsible for providing network analysis information upon request from network functions. For example, a network function may request specific analysis information on the load level of a particular network slice. Alternatively, the network function can use the subscribe service to ensure that it is notified by the NWDAF if the load level of a network slice changes or reaches a specific threshold. The NWDAF 117 may have an interface to various network functions on the mobile radio communication network side, e.g. to the AMF 101, the SMFs 110, 112 and the PCF 115. For simplicity, only the interface between the NWDAF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

In a 5G radio communication system like the radio communication system 100, network slice related quota may be defined. This means that for example the maximum number of UEs and/or the maximum number of PDU sessions provided by a network slice 106, 107 can be limited.

Network slice quota for a network slice may for example be defined only by the mobile network operator (MNO) or may also be defined by both a 3^{rd} party service provider (e.g. providing a service by means of the network slice) and the MNO. For example, the MNO and the 3^{rd} party service provider may have a corresponding service level agreement (SLA) prior to the network slice instantiation.

The maximum number of UEs in a network slice may be defined by a "Number of terminals" attribute. The maximum number of PDU Sessions may be defined by a "Number of connections" attribute. For example, according to the information model for the network slice NRM (Network Resource Model) a "maxNumberofUEs" attribute may be provided in the OAM 116. Similarly, an attribute relating the maximum number of connections may be included in the OAM 116 according to an embodiment.

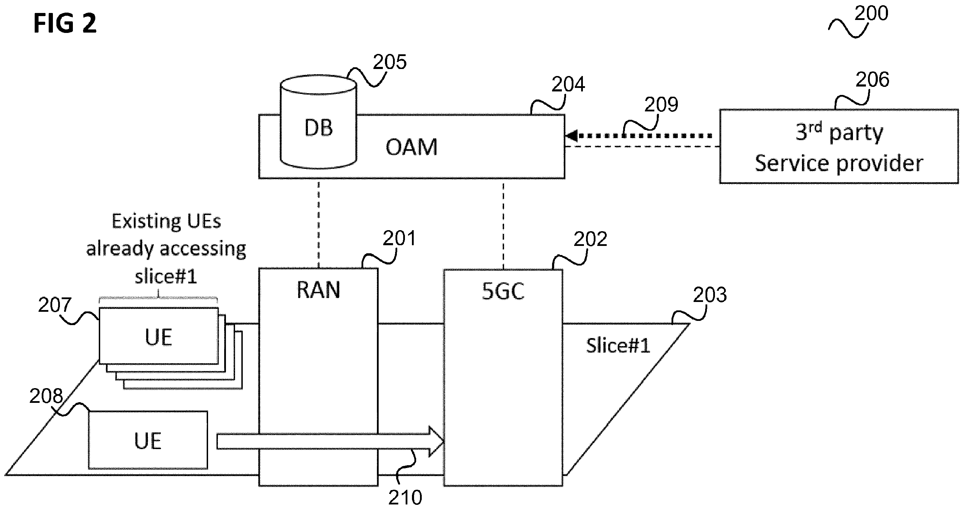

Figure 2 shows a radio communication system 200 having network slice quota.

The radio communication system 200 comprises a RAN 201, e.g. corresponding to RAN 103, a 5G core network (5GC) 202, e.g. corresponding to 5GC 118 which includes a (core) network slice 203, e.g. corresponding to one of the network slices 106, 107 and an OAM 204, e.g. corresponding to OAM 116. It should be noted that there may also be a plurality of RANs 201 providing radio access to the network slice 203.

The OAM 204 has a database 205 (e.g. a storage or memory) which stores quota for the network slice 203, e.g. the maximum number of UEs and/or the maximum number of PDU Session supported by (or allowed for) the network slice by the network slice 203.

Optionally, the quota may be based on a request 209 by a 3^{rd} party service provider 206 which requests the operator of the radio communication system 200 to limit a number of UEs and/or a number of PDU Sessions for the network slice 203.

It is assumed that a plurality of UEs 207 are already accessing the network slice 203 (i.e. are registered with the network slice 203 and/or have PDU sessions by means of the network slice 203). It is further assumed that an additional UE 208 sends a request 210 to access the core network slice 203 (i.e. to register with the core network slice 203 or to have a PDU session by means of the core network slice 203).

In the following, embodiments are described providing mechanisms which allow the 5G core network 118 to handle the request 210 of the additional UE 208 if a corresponding network slice quota (i.e. maximum number of UEs or maximum number of PDU Sessions) has already been reached (by means of the UEs 207), i.e. to enforce a network slice quota.

It should be noted that the enforcement of a network slice quota could be on a different granularity, for example, the network slice quota could be defined for the whole PLMN network or for a specific (geographic) area, which is one of the areas that the network slice covers in the PLMN network (i.e. a sub-area of the PLMN coverage area). With such granularity, in other words, this would mean that there could be the maximum number of UEs to be served for the network slice in the whole PLMN coverage area or the maximum number of UEs to be served for the same network slice for a particular (sub-)area. Similarly, for example, there could also be the maximum number of PDU sessions to be served for the network slice in the whole PLMN or the maximum number of PDU Sessions to be served for the same network slice for a particular area. The particular area could be defined based on registration area, or tracking area or even the smallest area served by a base station or by geographic specification of the geographical area.

It should be noted that the mechanisms described in the following may be implemented in addition to (e.g. S-NSSAI-based) congestion control and access control and barring (e.g. UAC (Unified Access Control)) which do both not address the issue of fulfilling network slice related quota.

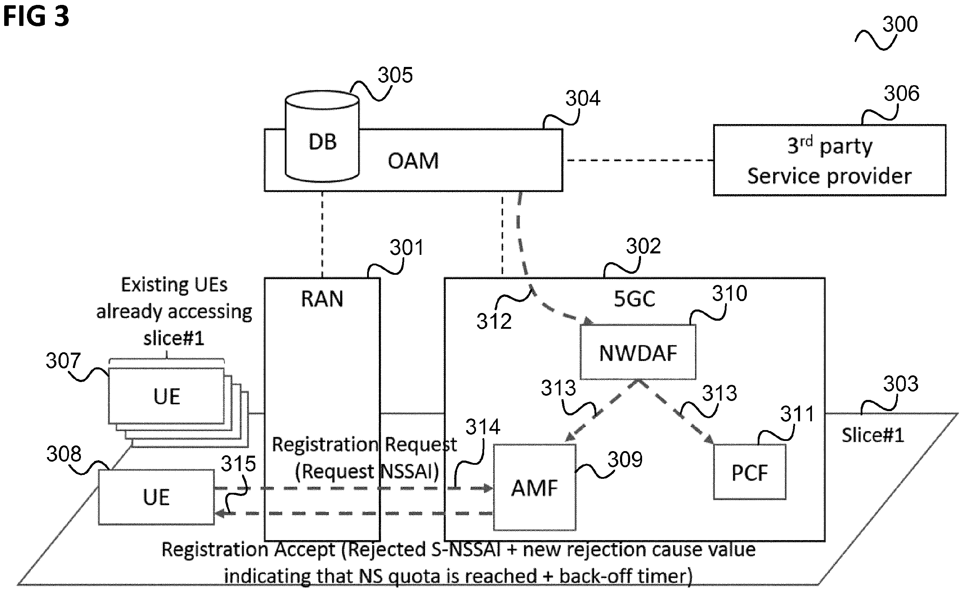

Figure 3 illustrates the handling of a network slice quota regarding the maximum number of UEs allowed to being registered to a network slice of a radio communication system 300.

Similarly to the radio communication system 200, the radio communication system 300 comprises a RAN 301, a 5G core network (5GC) 302 having a (core) network slice 303 and an OAM 304. As in the example of figure 2, a 3^{rd} party service provider may be involved in the definition of a network slice quota.

In this example the network slice quota is assumed to limit the maximum number of UEs allowed to be registered with the network slice 303. Accordingly, the OAM 304 stores, in its database 305, the related quota information which includes in this case the maximum number of UEs. Further, it acquires and stores information about the current usage of the network slice 303, i.e. the number of UEs 307 currently registered in the network slice 303. For example, the OAM 304 may collect the information of the current usage of the network slice 303 from the AMF 309 of the network slice 303.

In the following, an example is explained how the 5GC 302 handles the case that the quota has been reached and an additional UE 308 sends a registration request with a Requested NSSAI specifying the network slice in 314. Such a registration request is received by an AMF 309 of the 5GC 302.

In 312, e.g. on a regular basis (e.g., event based subscription/notification) or on demand basis (e.g., via a request/response approach), the OAM 304 provides the related (network slice) quota information and the information about the current usage of the network slice 303 to 5GC 302, e.g. to a NWDAF (Network Data Analytics Function) 310 of the 5GC 302, e.g. corresponding to NWDAF 117 of figure 1. The OAM 304 may for example provide this information to the NWDAF 310 by means of an information element (IE) newly introduced for that purpose.

In 313, if the current usage of the network slice 303 reaches the network slice quota, the NWDAF 310 informs other 5GC network functions such that they are aware that the NS quota has been reached. This may be performed by an information element (IE) newly introduced for that purpose. For example, the NWDAF 310 may inform the AMF 309 in this manner and/or may inform the PCF 311. If the PCF 311 is informed, it may in turn inform the AMF 309, for example in course of a communication like AM Policy Association Establishment/Modification between the AMF 309 and the PCF 311 (enhanced or extended to support notification of the network slice quota being reached).

It should be noted that instead of informing network functions via the NWDAF, the OAM 304 may also directly inform network functions like AMF 309, PCF 311 or also an SMF that the quota has been reached without NWDAF involvement.

According to the quota having been reached, the AMF 309, in 315, responds to the request of 314 by means of a rejection of registration to the network slice 302. For example, it may send a registration accept (indicating one or more allowed network slices other than the network slice 203). The registration accept message includes an indication of the rejected S-NSSAI of the network slice 302 and may further include a rejection cause value which indicates that the network slice quota is reached and may include an indication of back-off time. The UE 308 may be configured to only request registration to the network slice 302 again when the back-off time has elapsed. In case there is no allowed network slices other than the network slice 203 that the UE can be registered, then the AMF may send the Registration Reject message with the cause value of no network slice is allowed and/or with the cause value of the network slice quota has been reached.

It should be noted that the UE 308 may get a message from the core network/radio access network that the network slice quota is not reached anymore while the back-off time is running. This enables the UE to send the registration request again to the network.

Thus, the communication network enforces the network quota. The 5GC 302 may send a notification that enforcement of network slice quota reach is ongoing to the OAM 304 for information so that the OAM 304 is aware of such an enforcement.

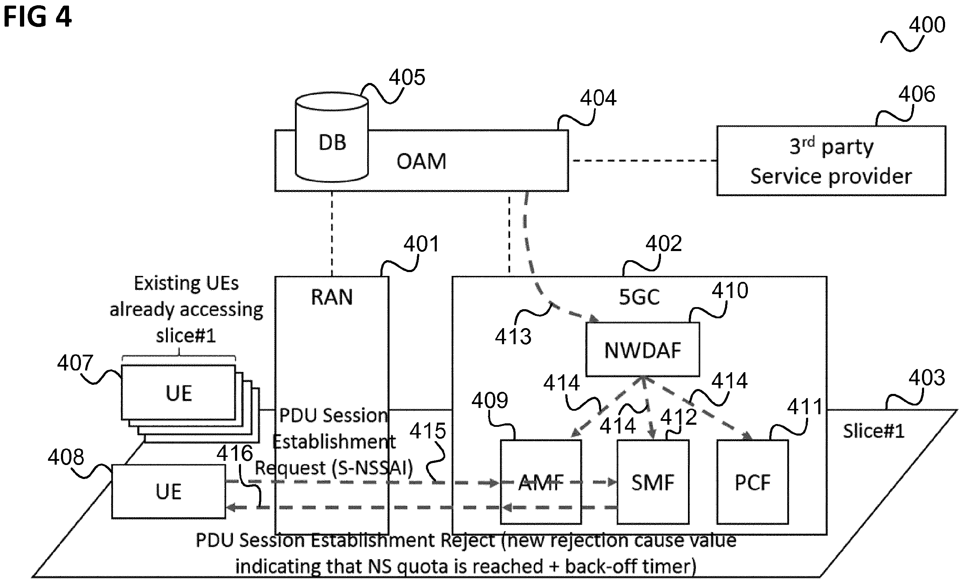

Figure 4 illustrates the handling of a network slice quota regarding the maximum number PDU sessions allowed to be provided by a network slice of a radio communication system 400.

Similarly to the radio communication system 200, the radio communication system 400 comprises a RAN 401, a 5G core network (5GC) 402 having a (core) network slice 403 and an OAM 404. As in the example of figure 2, a 3^{rd} party service provider may be involved in the definition of a network slice quota.

In this example the network slice quota is assumed to limit the maximum number of PDU sessions allowed to be provided in the network slice 403. Accordingly, the OAM 404 stores, in its database 405, the related quota information which includes in this case the maximum number of PDU sessions. Further, it acquires and stores information about the current usage of the network slice 403, i.e. the current number of PDU sessions provided in the network slice 403 to UEs 407. For example, the OAM may collect such current usage of network slice from the SMF 412 of the network slice 403.

In the following, an example is explained how the 5GC 402 handles the case that the quota has been reached and a UE 408 (which may be part of UEs 407) sends a PDU session request for an additional PDU session with a Requested NSSAI specifying the network slice in 415. Such a PDU session request is received by an SMF 412 of the 5GC 402.

In 413, e.g. on a regular basis, the OAM 404 provides the related (network slice) quota information and the information about the current usage of the network slice 403 to 5GC 402, e.g. to a NWDAF (Network Data Analytics Function) 410 of the 5GC 402, e.g. corresponding to NWDAF 117 of figure 1. The OAM 404 may for example provide this information to the NWDAF 410 by means of an information element (IE) newly introduced for that purpose.

In 414, if the current usage of the network slice 403 reaches the network slice quota, the NWDAF 410 informs other 5GC network functions such that they are aware that the NS quota has been reached. This may be performed by an information element (IE) newly introduced for that purpose. For example, the NWDAF 410 may inform the SMF 412 in this manner and/or may inform the PCF 411. If the PCF 411 is informed, it may in turn inform the SMF 412.

It should be noted that instead of informing network functions via the NWDAF, the OAM 404 may also directly inform network functions like AMF 409, PCF 411 and SMF 412 that the quota has been reached without NWDAF involvement.

According to the quota having been reached, the SMF 409, in 416, responds to the request of 415 by means of a rejection of PDU session establishment. For example, it may send a PDU session establishment reject message which may include a rejection cause value which indicates that the network slice quota is reached, i.e., the current number of PDU Sessions already established within the network slice reaches the maximum number of PDU Sessions that the network slice can support or provide, and may include an indication of back-off time. The UE 408 may be configured to only request a PDU session provided by means the network slice 402 again when the back-off time has elapsed.

It should be noted that the UE 408 may get a message from the core network/radio access network that the network slice quota is not reached anymore during the back-off time is running. This enables the UE to send the PDU Establishment Request again to the network.

Thus, the communication network enforces the network quota. The 5GC 402 may send a notification that enforcement of network slice quota reach is ongoing to the OAM 404 for information so that the OAM 404 is aware of such an enforcement.

As mentioned above, a 3^{rd} party service provider 406 may be involved in the definition of network slice quota in the OAM 404, 405.

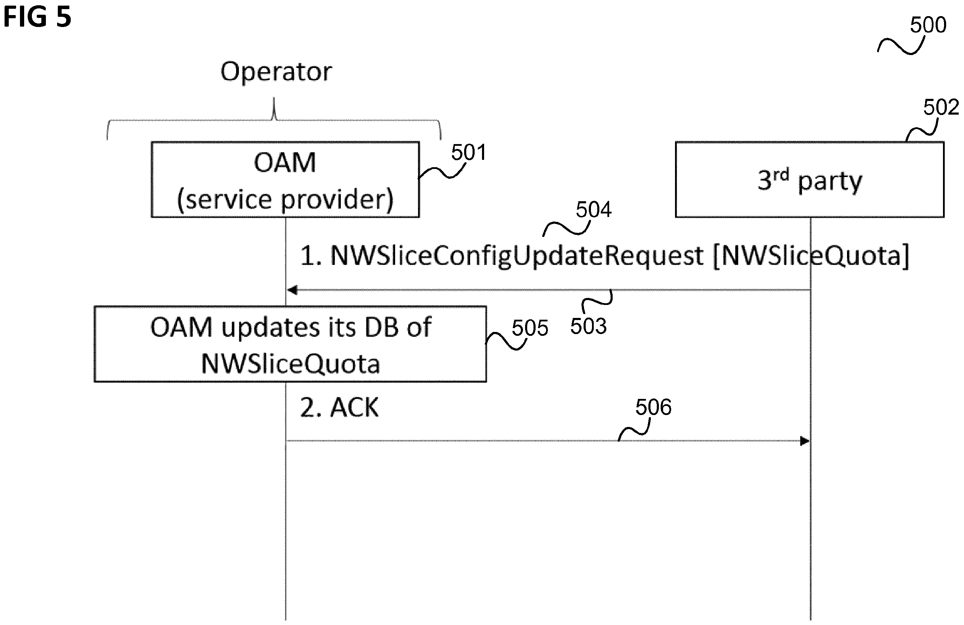

Figure 5 shows a flow diagram 500 illustrating an OAM service enhancement to support a 3^{rd} party for configuring or updating network slice quota.

An OAM 501 belonging to an operator and acting as a service provider in this case as well as a 3^{rd} party (e.g. 3^{rd} party server) are involved in the flow.

In 503, the 3^{rd} party transmits an NWSliceConfigUpdateRequest message 504 which may include a specification of a network slice quota. The network slice quota can be the maximum number of the UEs or the maximum number of PDU Sessions that the network slice supports. The message 504 may be of a message type newly introduced for that purpose and may include the specification of the network slice quota by means of an information element newly introduced for that purpose.

In response, in 505, the OAM 501 updates its database (e.g. corresponding to OAM database 305, 405) with the specified network slice quota and acknowledges the update (or definition) of the network slice quota in 506 to the 3^{rd} party 502.

Components of the radio communication system 300, 400 such as network functions or the RAN 301, 401 may acquire information from the OAM 304, 404 about the network slice quota defined by a corresponding subscription.

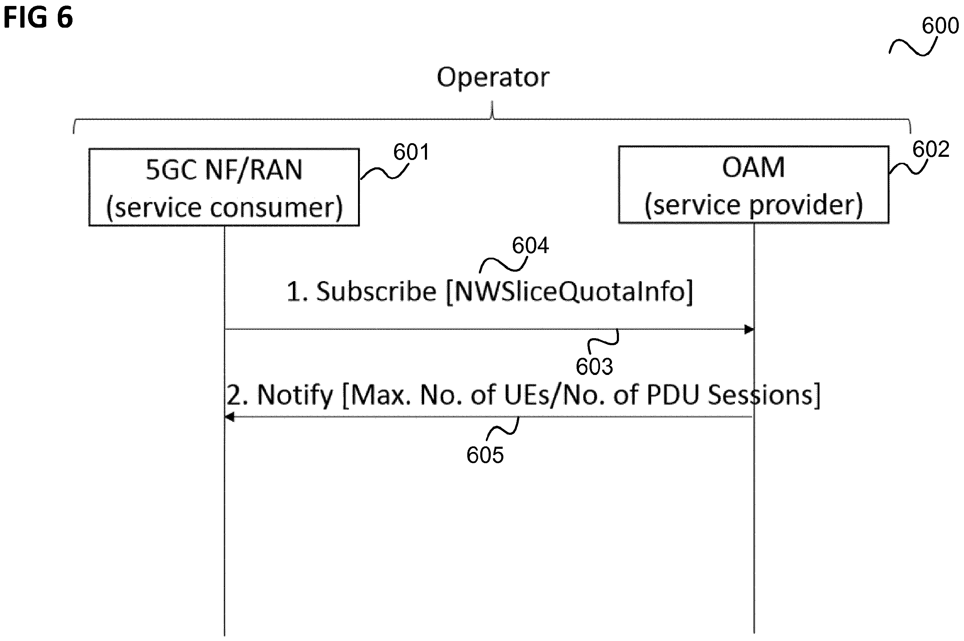

Figure 6 shows a flow diagram 600 illustrating an OAM service enhancement to allow network slice quota information subscription by a 5GC network or RAN.

A 5GC network function or RAN component 601, acting as service consumer, and an OAM 602, acting as service provider, are involved in the flow. Both belong the mobile network operator.

In 603, the 5GC network function or RAN component 601 sends a subscribe message 604 to the OAM 602 to subscribe to be notified about the information about the network slice quota being defined. This may happen by means of an information element newly introduced for that purpose.

In response, in 605, the OAM 602 notifies the 5GC network function or RAN component 601 about the maximum number of UEs and/or maximum number of PDU sessions allowed for a network slice (e.g. per network slice for a plurality of network slices for which the information was requested). The OAM 602 may repeat this in case the information is updated. The OAM 602 may transmit this information by means of an information element newly introduced for that purpose.

Similarly, components of the radio communication system 300, 400 such as network functions or the RAN 301, 401 or also the 3^{rd} party may acquire information from the OAM 304, or may subscribe to the information from the OAM 304, 404 about the network slice quota being reached.

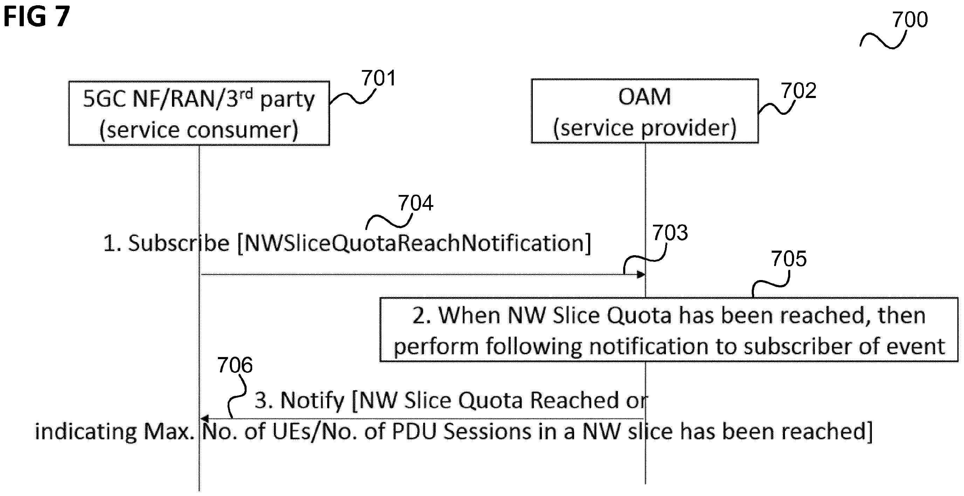

Figure 7 shows a flow diagram 700 illustrating an OAM service enhancement to allow subscription for notification when a network slice quota has been reached.

A 5GC network function, RAN component or 3^{rd} party component 701, acting as service consumer, and an OAM 702, acting as service provider, are involved in the flow. The 5GC network function, the RAN component and the OAM belong to the mobile network operator. The 3^{rd} party component could be the Application Function, which could be entity owned by the operator serving as the service provider or could be an entity owned by the 3^{rd} party service provider.

In 703, the 5GC network function, RAN component or 3^{rd} party component 701 sends a subscribe message 704 to the OAM 702 to subscribe to be notified about the network slice quota being reached. This may happen by means of an information element newly introduced for that purpose.

In response, in 706, when the network slice quota has been reached in 705, the OAM 702 notifies the 5GC network function or RAN component or 3^{rd} party component 701 that the network slice quota has been reached and/or may indicate that the maximum number of UEs and/or the maximum number of PDU Sessions in a network slice (e.g. for which the notification has been requested) has been reached. The OAM 702 may transmit this information by means of an information element newly introduced for that purpose.

For the case that the NWDAF 310, 410 is informed by the OAM 304, 404 when a network slice quota is fulfilled, components of the radio communication system 300, 400 such as network functions or the RAN 301, 401 may acquire information from the NWDAF 310, 410 about the network slice quota being reached by means of a corresponding subscription. Alternatively, the network functions in the 5GC or the RAN 301, 401 may acquire information from the OAM 304, 404 directly without the NWDAF 310, 410 being involved.

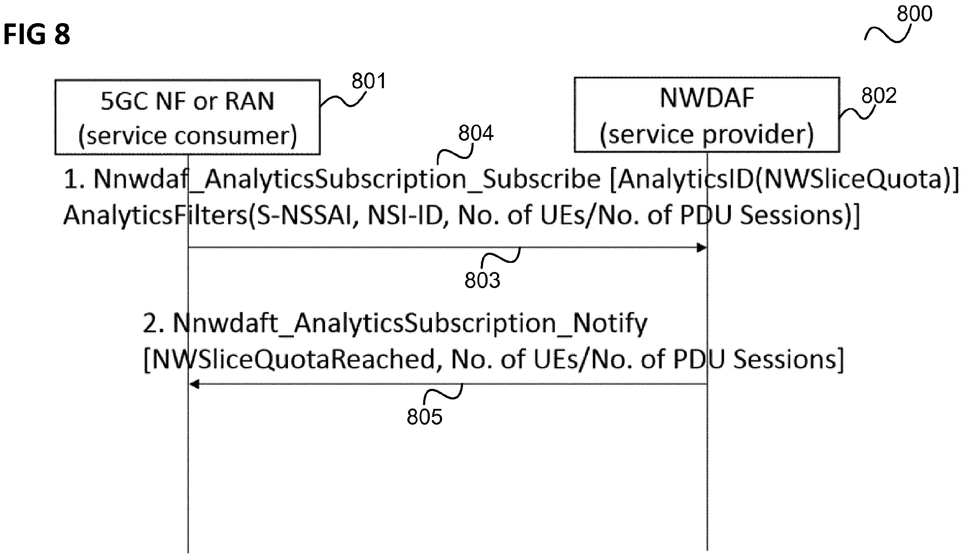

Figure 8 shows a flow diagram 800 illustrating an NWDAF service enhancement to allow subscription for notification when a network slice quota has been reached.

A 5GC network function or RAN component 801, acting as service consumer, and a NWDAF 802, acting as service provider, are involved in the flow.

In 803, the 5GC network function or RAN component 801 sends a subscribe message 804 to the OAM 802 to subscribe to be notified when the network slice quota is reached. It may do that by means of an Nnwdaf_AnalyticsSubscription_Subscribe message, which may include an information element, e.g., the NWSliceQuota or the maximum number of UEs/maximum number of PDU Sessions supported by the network slice is newly introduced for that purpose. Further, the 5GC network function or RAN component 801 may define AnalyticsFilters specifying an S-NSSAI (to identify the network slice for which a notification is requested), optionally an NSI-ID (network slice instance-ID) an information element (e.g. newly introduced for that purpose) which allows the 5GC network function or RAN component 801 to indicate that it wants only to be informed about that the maximum number of UEs has been reached or wants only to be information about that the maximum number of PDU sessions has been reached. In other words, this information element allows indicating to the NWDAF 802 in what the 5GC network function or RAN component 801 is interested. If not indicated, the NWDAF will simply provide the network slice quota information to the 5GC network function or RAN component 801 with an indication that the network slice quota reached is for the case of maximum number of UEs being reached or for the case of maximum number of PDU Session being reached.

In response, in 805, when the network slice quota has been reached, the NWDAF 802 notifies the 5GC network function or RAN component 801 that the network slice quota has been reached and/or that the maximum number of UEs has been reached and/or the maximum number of PDU Sessions has been reached, respectively. The NWDAF 802 may transmit this information by means of an information element newly introduced for that purpose.

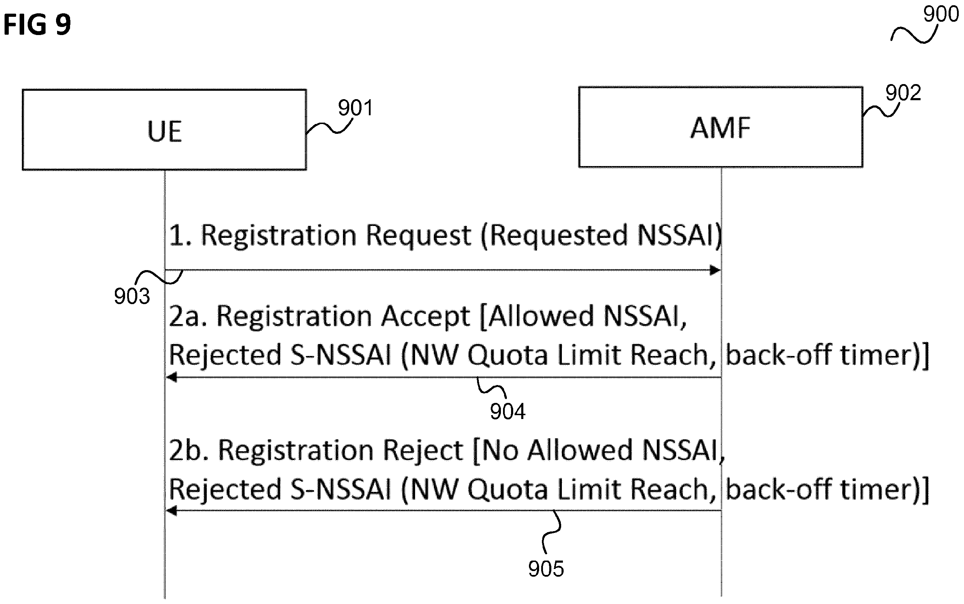

As explained with reference to figure 3, the AMF 309 rejects a registration request when the maximum number of registered UEs has been reached. This is shown in more detail in figure 9.

Figure 9 shows a flow diagram 900 illustrating the usage of a quota limit reach rejection cause for a registration reject message.

A UE 901 and an AMF 902 are involved in the flow.

In 903, the UE 901 sends a registration request with a requested NSSAI to the AMF 902. The requested NSSAI is a list of requested S-NSSAIs. In other words, this registration request may consist of a request to be registered to the network slice and/or to establish a PDU Session for the respective requested network slice(s). It is assumed that the network quota limit regarding the maximum number of UEs in a network slice identified by the NSSAI and/or regarding the maximum number of PDU Sessions already provided in the network slice has been reached. The AMF 902 therefore rejects the registration request for that network slice. It should be noted that registration requests for multiple network slices may be rejected in this manner.

The AMF 902 may respond depending on whether for one or more other network slices (also identified by the NSSAI) registration is allowed.

If registration in one or more other requested network slices is allowed, the AMF 902 sends, in 904, a registration accept (indicating one or more allowed network slices other than the network slice(s) for which registration was rejected).

In addition, the registration accept message includes an indication of the rejected S-NSSAI(s) and may further include a rejection cause value which indicates that the network slice quota (limit) is reached and may include an indication of back-off time. Furthermore, the indication that the network slice quota is reached may be further indicated that due to the maximum number of UEs or due to the maximum number of PDU Sessions already provided in the network slice has been reached. The UE 901 may be configured to only request registration to the network slice(s) for which registration was rejected to the quota limit being reached again when the back-off time has elapsed.

If registration for none of the other requested network slices is allowed, the AMF 902 sends, in 905, a registration rejection message which includes an indication of the rejected S-NSSAI(s) and may further include a rejection cause value which indicates that the network slice quota (limit) is reached and may include an indication of back-off time. The UE 901 may be configured to only request registration to a network slice for which registration was rejected due to the quota limit being reached again when the back-off time has elapsed.

It should be noted that the UE 901 may get a message from the core network/radio access network that the network slice quota is not reached anymore during the back-off time is running. This enables the UE to send the registration request again to the network.

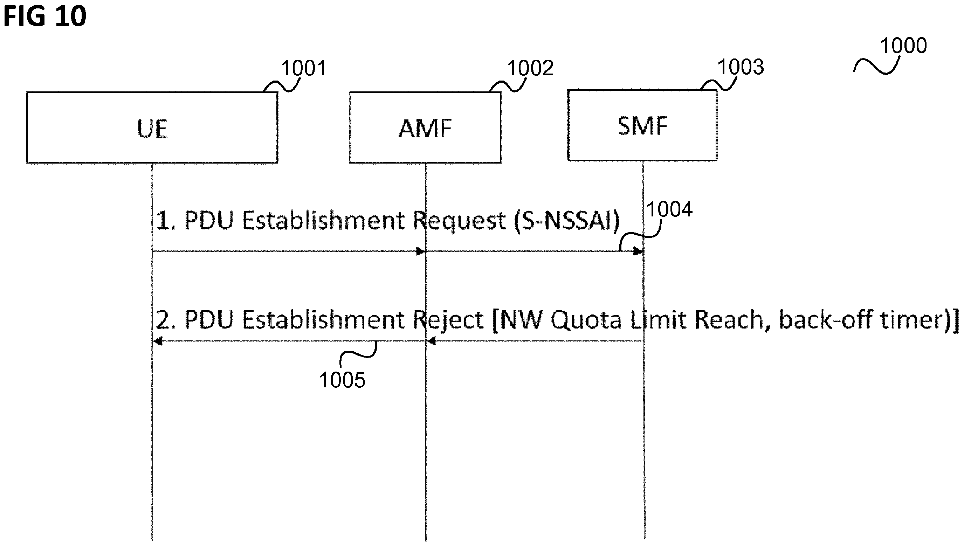

As explained with reference to figure 4, the SMF 412 rejects a PDU establishment request when the maximum number of PDU sessions has been reached. This is shown in more detail in figure 10.

Figure 10 shows a flow diagram 1000 illustrating the usage of a quota limit reach rejection cause for a PDU Session establishment reject message.

A UE 1001, an AMF 1002 and an SMF 1003 are involved in the flow.

In 1004, the UE 1001 sends a PDU establishment request to the SMF 1003 via the AMF 1002 indicating the S-NSSAI of a network slice by means of which a PDU session should be provided.

It is assumed that the maximum number of PDU sessions for that network slice has been reached. Therefore, in 1005, the SMF 1003 sends a PDU establishment rejection via the AMF 1002 to the UE 1001.

The PDU Session establishment rejection may include a rejection cause value which indicates that the network slice quota or the maximum number of PDU Sessions that the network slice can provide is reached and may include an indication of back-off time. The UE 1001 may be configured to only request a PDU session provided by means the network slice again when the back-off time has elapsed.

It should be noted that the UE 1001 may get a message from the core network/radio access network that the network slice quota is not reached anymore during the back-off time is running. This enables the UE to send the PDU Session Establishment request again to the network.

It should be noted that when two UEs access the same network slice but via different AMFs simultaneously, a "racing issue" may arise, namely when the registration of one of the UEs for one of the UEs leads to the quota being reached and thus a registration for the other UE should be rejected.

According to one embodiment, this issue is addressed by that the PCF acquires information (by subscription or request) from the NWDAF about the network slice quota being reached before a response is sent to the UE, e.g. before the AMF returns a Registration Accept message to the UE.

It should be noted that the NWDAF may further indicate to the PCF whether the maximum number of UEs and/or the maximum number of PDU Sessions that the network could support is reached. This enables the PCF to further indicate other 5GC Network Functions such as the AMF or the SMF whenever there is a new Registration Request or a new PDU Session Establishment Request being sent by the UE to be registered for the network slice or to establish a new PDU Sessions to the network slice that already reaches its network slice quota.

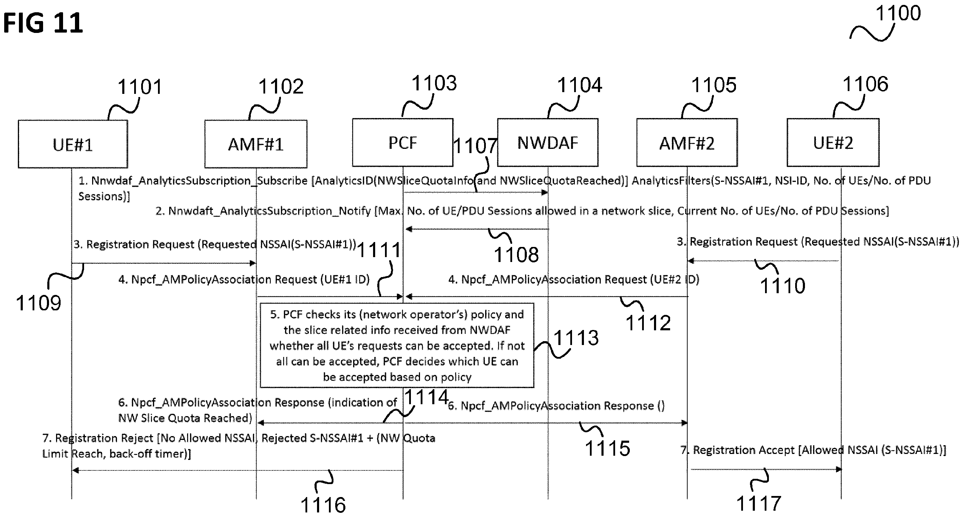

Figure 11 shows a flow diagram 1100 illustrating addressing a racing issue in case of two UEs requesting registration via different AMFs.

A first UE 1101, a first AMF 1101, a PCF 1103, a NWDAF 1104, a second AMF 1105 and a second UE 1106 are involved in the flow. For example, the UEs 1101, 1106 may correspond to two additional UEs like the additional UE 308 in figure 3 and the AMFs 1102, 1105 may correspond to two different AMFs like the AMF 309 of figure 3. The PCF 1103 may correspond to PCF 310 and the NWDAF 1104 may correspond to NWDAF 310.

In 1107 the PCF 1103 subscribes for information about the network slice quota (e.g. of network slice 302) and notification when the network slice quota has been reached at the NWDAF 1104, similarly as described with reference to figure 8.

In 1108, the NWDAF 1104 informs the PCF 1103 about the maximum number of UEs and/or PDU sessions allowed in the network slice and the current number of UEs and/or PDU sessions for the network slice.

It is assumed that in 1109, the first UE 1101 sends a registration request to the first AMF 1102 and in 1110, substantially at the same time (before the registration request by the first UE 1101 has been handled), the second UE 1106 sends a registration request to the second AMF 1105.

In 1111 and 1112, respectively, the AMFs 1101, 1105 send an AM policy association request to the PCF 1103, specifying the first UE 1101 and the second UE 1106, respectively.

In 1113, the PCF 1103 checks its (network operator's) policy and the slice related info received from NWDAF 1104 whether all UE's requests can be accepted. If not all can be accepted, the 1103 PCF decides which UE's request can be accepted based on the (operator) policy/local configuration that is available at the PCF.

In this example, it is assumed that not both UE's requests can be accepted and that the PCF 1103 decides that the request of the first UE 1101 should be rejected.

Accordingly, in 1114 and 1115, respectively, the PCF 1103 sends an AM policy association response to each of the AMFs 1102, 1105, wherein it indicates to the first AMF 1102 that the network slice quota has been reached. The first AMF 1102 therefore, in 1116, rejects the registration to the network slice by the first UE 1101, e.g. as described with reference to figure 9. In contrast, the second AMF 1105 accepts the registration to the network slice by the second UE 1106 in 1117.

Thus, it may be desirable that a PCF 311, 411 knows that a network slice quota has been reached. This is because while even in one network, there may be multiple PCFs deployed, the information available for those PCFs is typically synchronized. In contrast, in one network slice, there may be multiple AMF instances but the information used for making any decisions is typically not synchronized among them.

In addition to the racing situation as depicted in Figure 11, the similar racing situation but for the case of multiple PDU Session establishment requests are being sent by different UEs to different SMFs at the same time might also happen. In this case, the PCF checks its (network operator's) policy and the slice related info received from NWDAF 1104 whether all UE's PDU Session Establishment requests can be accepted. If not all can be accepted, the 1103 PCF decides which UE's request can be accepted based on the (operator) policy/local configuration, which is available at the PCF.

In the following, examples are described about how an NWDAF 310, 410 may collect information from a NF in 5GC or from OAM to know about the current number of UEs registered in a network slice or the current number of PDU Sessions provided in the network slice.

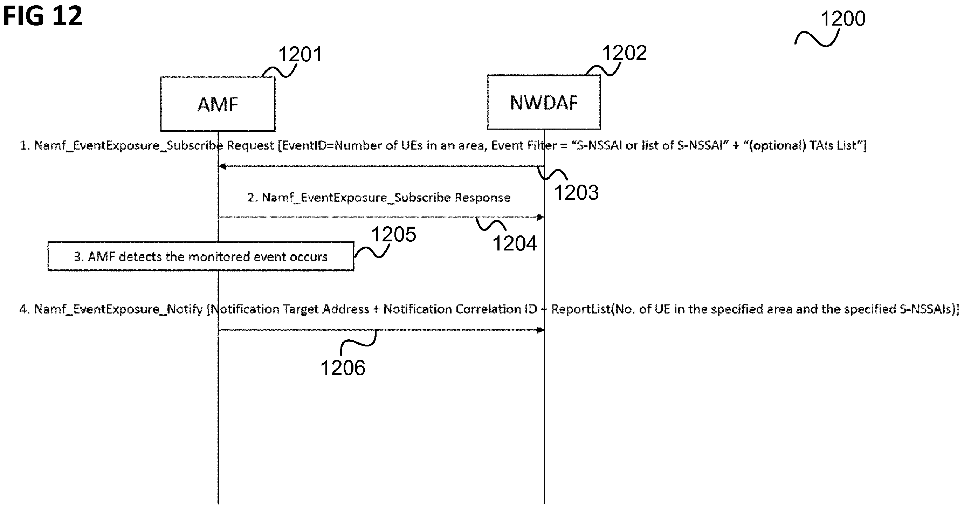

Figure 12 shows a flow diagram 1200 illustrating an example of an NWDAF collecting information from an AMF to know about the current number of UEs registered in a particular network slice (or particular network slices) in a specified area.

It should be noted that so that the NWDAF would know the total number of UEs being served by a network slice, it is assumed that the NWDAF knows in advance which AMFs are involved and in addition know which AMF is serving which area covered by the network slice. Having collecting information from all AMFs involved in the network slice about the number of UEs successfully registered to the network slice would lead to the total number of UEs being served by the network slice.

An AMF 1201 and an NWDAF 1202 are involved in the flow.

In 1203, the NWDAF 1202 sends a subscribe request to the AMF 1201 to be informed about the number of UEs registered in an area and, for each of one or more network slices, the number of UEs registered in the network slice. The NWDAF 1202 may specify the one or more network slices by an S-NSSAI or a list of S-NSSAIs. The request may further optionally a list of tracking area identifiers (for specifying an area) or a list of registration areas or a list of geographical area.

In 1204, the AMF 1201 acknowledges the subscription (and may notify the NWDAF about a current number of UEs present in the area and the number of UEs registered for each of the one or more network slices).

In 1205, the AMF 1201 detects that the number of UE present in the area and/or registered in the one or more network slices has changed and therefore, in 1206, informs the NWDAF 1202 about the changed number of UEs present in the area and the number of UEs registered for each of the one or more network slices.

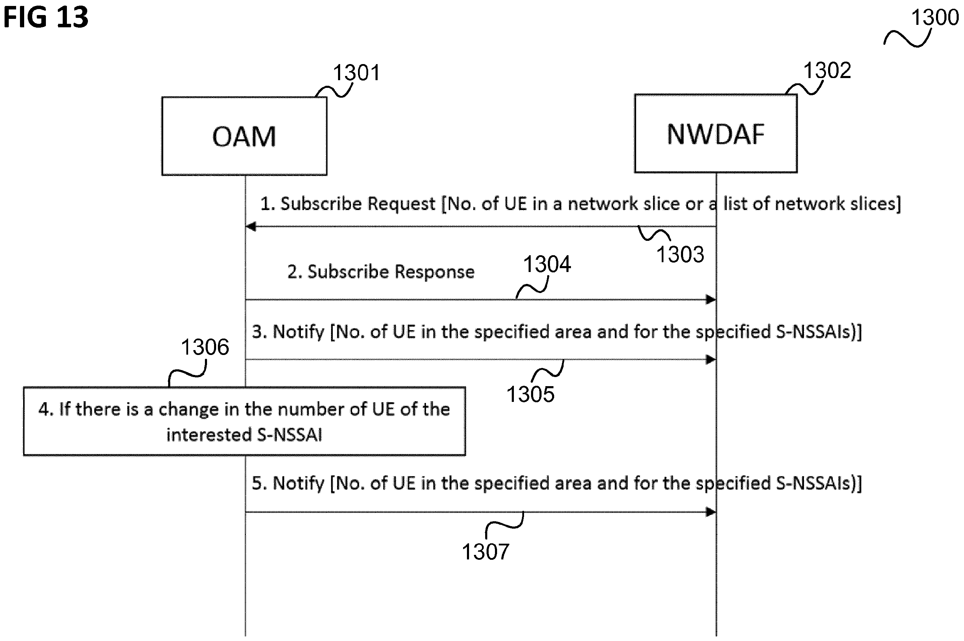

Figure 13 shows a flow diagram 1300 illustrating an example of an NWDAF collecting info from an OAM to know about the current number of UEs for one or more particular network slices in the whole PLMN.

The assumption here is that the OAM has collected the information of current number of UEs being registered or served by the network slice, e.g., via communicating with the AMFs in the network slice.

An OAM 1301 and an NWDAF 1302 are involved in the flow.

In 1303, the NWDAF 1302 sends a subscribe request to the OAM 1301 to be informed about the number of UEs registered in one or more network slices (which it may specify by means of a list of one or more network slices, e.g. a list of S-NSSAIs).

In 1304, the OAM 1301 acknowledges the subscription.

In 1305, the OAM 1301 notifies the NWDAF about the number of UEs registered in the one or more network slices. If there is a change of the number of UEs in the one or more network slices in 1306, the OAM 1301 notifies the NWDAF about the changed number of UEs registered in the one or more network slices in 1307.

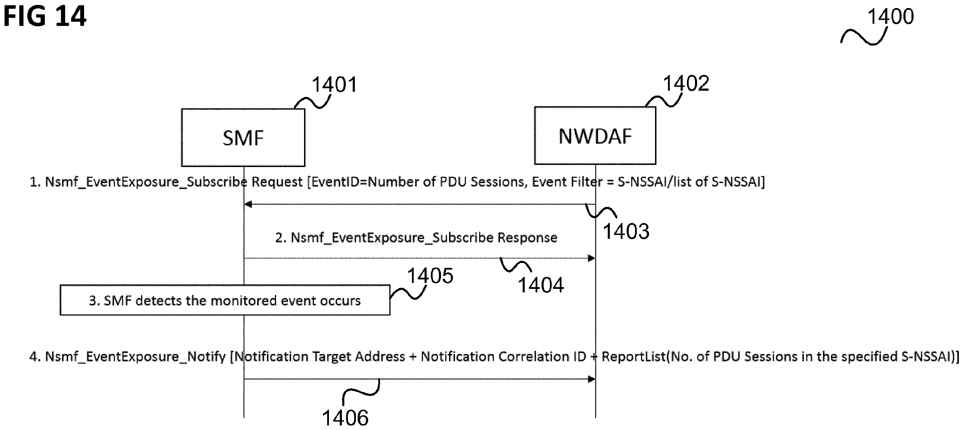

Figure 14 shows a flow diagram 1400 illustrating an example of an NWDAF collecting information from an SMF to know about the current number of PDU sessions provided by means of a particular network slice (or particular network slices).

It should be noted that so that the NWDAF would know the total number of PDU Sessions being served by a network slice, it is assumed that the NWDAF knows in advance which SMFs are involved in the network slice. Having collecting information from all SMFs involved in the network slice about the number of UEs successfully established a PDU Session in the network slice would lead to the total number of PDU Sessions being served by the network slice.

An SMF 1401 and an NWDAF 1402 are involved in the flow.

In 1403, the NWDAF 1402 sends a subscribe request to the SMF 1401 to be informed about the number of PDU sessions provided by each network slice of one or more network slices which it specifies by an S-NSSAI or a list of S-NSSAIs.

In 1404, the SMF 1401 acknowledges the subscription (and may notify the NWDAF 1402 about a current number of PDU sessions provided for each of the one or more network slices).

In 1405, the SMF 1401 detects that the number of PDU sessions provided by the one or more network slices has changed and therefore, in 1406, informs the NWDAF 1402 about the changed number of PDU sessions provided for each of the one or more network slices.

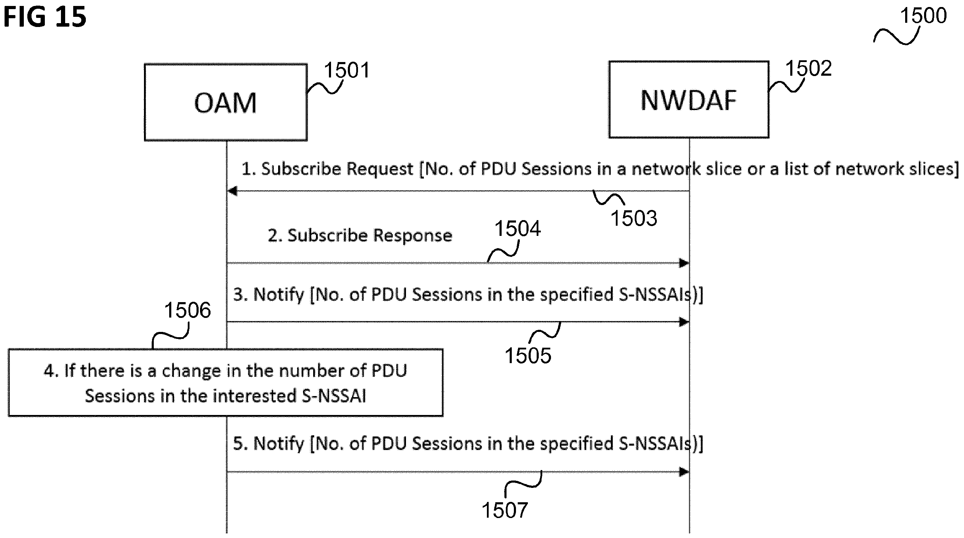

Figure 15 shows a flow diagram 1500 illustrating an example of an NWDAF collecting info from an OAM to know about the current number of PDU sessions provided by one or more particular network slices in the whole PLMN.

The assumption here is that the OAM has collected the information of current number of PDU Sessions supported by the network slice, e.g., via communicating with the SMFs in the network slice.

An OAM 1501 and an NWDAF 1502 are involved in the flow.

In 1503, the NWDAF 1502 sends a subscribe request to the OAM 1501 to be informed, for each of one or more network slices (which it may specify by means of a list of one or more network slices, e.g. a list of S-NSSAIs), about the number of PDU sessions provided in the network slice.

In 1504, the OAM 1501 acknowledges the subscription.

In 1505, the OAM 1501 notifies the NWDAF 1502 about, for each of one or more network slices, the number of PDU sessions provided in the network slices.

If there is a change of the number of PDU sessions provided by the one or more network slices in 1506, the OAM 1501 notifies the NWDAF 1502 about, for each of one or more network slices, the number of PDU sessions provided in the network slices in 1507.

According to the examples of figures 12 and 14, instead of letting the OAM provide the current number of registered UEs or PDU sessions to the NWDAF (or to 5GC network functions), the NWDAF may collect the information directly from 5GC NFs: it may collect from an AMF of a core network slice (identified by an S-NSSAI) the number of UEs which are successfully registered via an AMF and/or it may collect from an SMF of a core network slice (identified by an S-NSSAI) the number of PDU Sessions which are successfully established via the SMF

It should be noted that while in the examples of figures 12 to 15, information for checking whether a quota is reached is gathered by the NWDAF, this may also be performed by other components, like the OAM or also a PCF. For example, a PCF may make use of the policy control request (PCR) trigger "Change of UE presence in the Presence Reporting Area" according to which an AMF interacts again with the PCF after the AM Policy Association Establishment or UE Policy Association Establishment. This triggers when the UE is entering or leaving a presence reporting area. The PCF may thus monitor UE presence, for example.

Another possibility is that a component providing secondary authentication and authorization (i.e. slice specific authentication and authorization) subscribes to be notified when the NW slice quota limit has been reached either directly to NWDAF or to the OAM. In case the slice specific authentication and authorization is owned by the 3^{rd} party, which is not the network operator PLMN, the slice specific authentication and authorization may subscribe to be notified when the NW slice quota limit has been reached via a Network Exposure Function (NEF) which then further subscribe this information of network slice quota reached to the NWDAF or to the OAM. After the slice specific authentication and authorization is informed about the network slice quota has been reached, it may not authorize the UE depending on whether the quota has been reached and the allowed NSSAI may be set (or updated) accordingly.

Further, an Application Function (AF) may subscribe to NWDAF regarding the NW Slice Quota Reach Event or regarding the number of current UEs/current PDU Sessions supported by the network slice directly to the NWDAF or via a Network Exposure Function (NEF), which then further subscribe to the NWDAF.

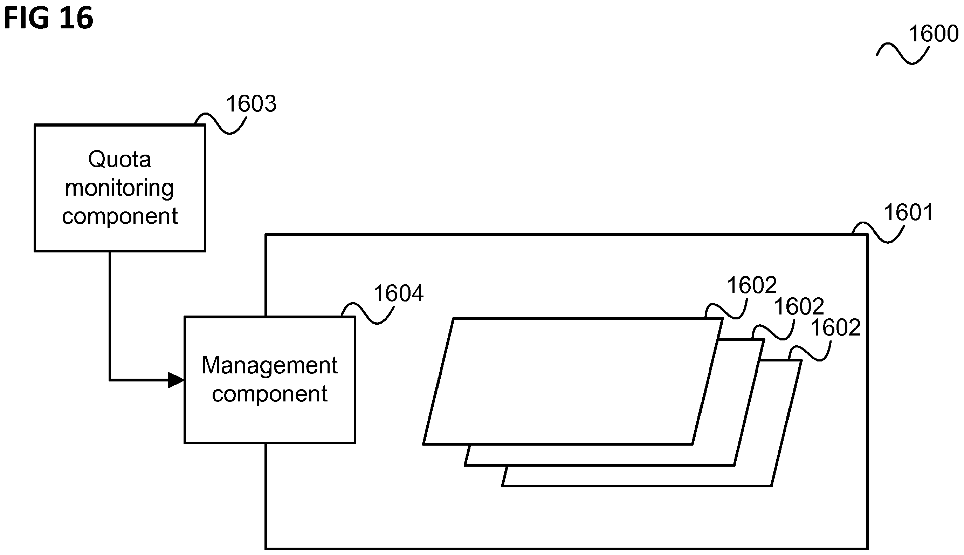

In summary, according to various embodiments, a communication network is provided as illustrated in figure 16.

Figure 16 shows a communication network arrangement 1600 according to an embodiment.

The communication network arrangement 1600 comprises one or more network slices 1602 of a communication network 1601.

The communication network arrangement 1600 further comprises a quota monitoring component 1603 and a management component 1604.

The quota monitoring component 1603 is configured to detect whether a quota which limits the maximum number of mobile terminals registered in a network slice and/or the maximum number of sessions provided in (or by) the network slice has been reached and is configured to notify the management component if the quota has been reached.

The management component 1604 is configured to reject a request of a mobile terminal for registration to the network slice or establishment of a session in (by) the network slice if the quota has been reached.

According to various embodiments, in other words, a communication network comprises a control arrangement comprising a quota monitoring component and a management component. The quota monitoring component, which may also be seen as detection component, checks whether a quota (regarding a number of registered terminals and/or a number of established sessions) of a network slice has reached its limit. If this is the case, it notifies a management component, which is e.g. the component responsible for handling the respective type of requests for the network slice. This notification may be direct but may also be performed via other components. For example, an OAM may inform an AMF via an NWDAF and/or a PCF or an NWDAF may inform an AMF via a PCF. In response to the notification (which may also be an instruction by the quota monitoring component) the management component rejects the request.

In other words, the control arrangement is configured to enforce the quota. It may thus also be seen as a quota enforcing arrangement.

It should be noted that a network slice may cover the CN part, the RAN part or both the CN part and the RAN part of a mobile radio communication network. In particular this means that the network slice may be a core network slice or may be a RAN network slice or may be a network slice comprising both core network components and RAN network components.

According to various embodiments, mechanisms are introduced to notify and/or update the network slice related quota information, e.g. to a communication network function, e.g. in 5GC/RAN. A request of a mobile terminal, e.g. a UE, for registration or session establishment may then be rejected based on the network slice quota. This allows an operator to enforce network slice related quota, which may for example be based on a service level agreement. For example, a 3^{rd} party may be allowed to request the definition or update of network slice related quota, e.g. from an OAM of the operator of the communication network.

In other words, the approach of figure 16 provides a mechanism for 5GS to enforce network slice related quota handling, e.g., to ensure that the maximum number of UEs and/or the maximum number of (e.g. PDU) sessions in a network slice is kept within a network slice quota.

It should be noted that the communication network arrangement 1600 of figure 16 may refer at least to parts of a whole radio communication network, e.g. a 5G radio communication network. For example, it may only refer to the parts involved in the quota enforcement, i.e. the control arrangement including the quota monitoring component and the management component and including at least one network slice. This means that the communication network arrangement 1600 may to a part of the components (in particular to one or more core network components) of a radio communication network and does not necessarily include a complete radio communication network like radio access network etc.

The quota monitoring component may be coupled to or may comprise a data acquisition component, i.e. a network component that is configured to collect the information of current status of network slice in terms of number of UEs and/or number of PDU Sessions.

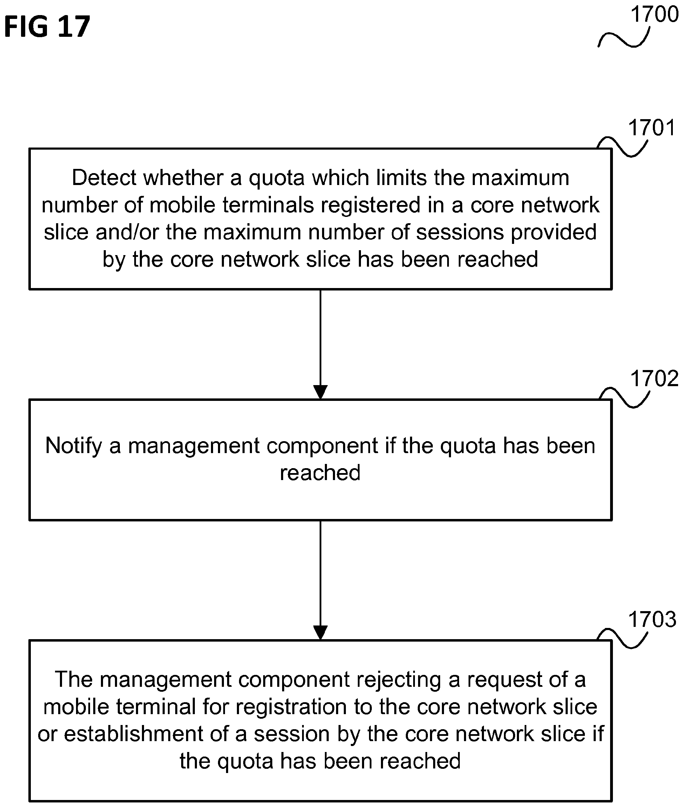

The communication network for example carries out a method as illustrated in figure 17.

Figure 17 shows a flow diagram 1700 illustrating a method for handling registration and/or session requests.

In 1701, it is detected whether a quota which limits the maximum number of mobile terminals registered in a network slice and/or the maximum number of sessions provided in the network slice has been reached.

In 1702, if the quota has been reached, a management component is notified.

In 1703, the management component rejects a request of a mobile terminal for registration to the network slice or establishment of a session in the network slice if the quota has been reached.

The components of the communication network arrangement (e.g. the quota monitoring component and the management component) and further components of the communication network may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

According to a further embodiment, a method and an arrangement for a communication network to perform network slice related quota management are provided. According to one embodiment, a network slice consists of a radio access network (RAN) part and a core network part of a core network (CN), which comprises one or more network entities. An operational and administrating management (OAM) component is provided for the network slice. In the method and arrangement, a UE requests for an access to the network slice or to set up a PDU Session to the network slice. The OAM component or the core network performs quota management related to the network slice which includes configuring the network slice with network slice quota including, e.g., a maximum number of UEs, a maximum number of PDU sessions, etc., subscribing the event when the network slice quota has been reached (e.g. by one or more network entities in the core CN or the RAN), notifying the event when the network slice quota has been reached to the network entities subscribing for the event and rejecting the UE request for access to a network slice or for establishing a PDU Session in the network slice, respectively, with an indication that a network slice quota has been reached and with a back-off timer to bar the UE from sending the request again while the back-off timer is running.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication network arrangement comprising
one or more network slices of a communication network; a quota monitoring component; and
a management component, wherein
the quota monitoring component is configured to detect whether a quota which limits the maximum number of mobile terminals registered in a network slice and/or the maximum number of sessions provided in the network slice has been reached,
the quota monitoring component is configured to notify the management component if the quota has been reached and
the management component is configured to reject a request of a mobile terminal for registration to the network slice or establishment of a session in the network slice if the quota has been reached.

2. Communication network arrangement of claim 1, wherein the communication network is a 5G mobile communication network.

3. Communication network arrangement of any one of claims 1 or 2, further comprising a data acquisition component configured to acquire information about a current number of mobile terminals registered in the network slice and/or a current number of sessions provided in the network slice.

4. Communication network arrangement of any one of claims 1 to 3, wherein the quota limits the maximum number of mobile terminals registered in the network slice and the management component comprises an Access and Mobility Management Function.

5. Communication network arrangement of any one of claims 1 to 4, wherein the quota limits the maximum number of sessions provided in the network slice and the management component comprises a Session Management Function.

6. Communication network arrangement of any one of claims 1 to 5, comprising a storage component configured to store a specification of the quota.

7. Communication network arrangement of claim 6, wherein the storage component is configured to allow configuration of the quota by a third party network component.

8. Communication network arrangement of any one of claims 1 to 7, wherein the management component is configured to request from the quota monitoring component to be notified when the quota has been reached.

9. Communication network arrangement of claim 8, wherein the management component is configured to request from the quota monitoring component to be notified when the quota has been reached by means of a notification service subscription.

10. Communication network arrangement of any one of claims 1 to 9, comprising a plurality of management components configured receive requests for registration to the network slice or establishment of a session form multiple mobile terminals and further comprising a control component configured to check, in case of a plurality of unanswered requests for registration to the network slice or establishment of a session, whether the requests may be only partially fulfilled because of the quota being reached and, if the requests can only be partially fulfilled, control one or more of the management components to reject a request received by the management components.

11. Communication network arrangement of claim 10, wherein the control component is configured to select one or more mobile terminals from which the plurality of management components have received requests for registration to the network slice or establishment of a session and to control the one or more of the management components to reject a the requests of the selected one or more mobile terminals.

12. Communication network arrangement of claim 11, wherein the control component is configured to select the one or more mobile terminals based on an operator policy and/or based on the UE's subscription information indicating the priority ranking of the one or more mobile terminals.

13. Communication network arrangement of any one of claims 1 to 12, wherein the management component is configured to reject the request of the mobile terminal by means of transmission of a message to the mobile terminal including a back-off time during which the mobile terminal may not request registration to the network slice or establishment of a session in the network slice.

14. Communication network arrangement of any one of claims 1 to 13, wherein the quota limits the maximum number of mobile terminals registered in the network slice and/or the maximum number of sessions provided in the network slice for mobile terminals located in a pre-defined geographic sub-area of a coverage area of the network slice and wherein the management component is configured to reject a request of a mobile terminal for registration to the network slice or establishment of a session in the network slice if the quota has been reached and the mobile terminal is located in the sub-area.

15. A method for handling registration and/or session requests comprising
detecting whether a quota which limits the maximum number of mobile terminals registered in a network slice and/or the maximum number of sessions provided in the network slice has been reached,
notifying a management component if the quota has been reached and
the management component rejecting a request of a mobile terminal for registration to the network slice or establishment of a session in the network slice if the quota has been reached.

## Amended claims

### Amended claims in accordance with Rule 137(2) EPC.

1. A communication network arrangement (1600) comprising
one or more network slices (106, 107) of a communication network (1601);
a quota monitoring component (1603); and
a management component (1604), wherein
the quota monitoring component (1603) is configured to detect whether a quota which limits the maximum number of mobile terminals registered in a network slice and/or the maximum number of sessions provided in the network slice has been reached,
the quota monitoring component (1603) is configured to notify the management component (1604) if the quota has been reached and
the management component (1604) is configured to reject a request of a mobile terminal (102) for registration to the network slice or establishment of a session in the network slice if the quota has been reached.

2. Communication network arrangement (1600) of claim 1,
wherein the communication network is a 5G mobile communication network.

3. Communication network arrangement (1600) of any one of claims 1 or 2, further comprising a data acquisition component configured to acquire information about a current number of mobile terminals registered in the network slice and/or a current number of sessions provided in the network slice.

4. Communication network arrangement (1600) of any one of claims 1 to 3, wherein the quota limits the maximum number of mobile terminals registered in the network slice and the management component (1604) comprises an Access and Mobility Management Function.

5. Communication network arrangement (1600) of any one of claims 1 to 4, wherein the quota limits the maximum number of sessions provided in the network slice and the management component (1604) comprises a Session Management Function.

6. Communication network arrangement (1600) of any one of claims 1 to 5, comprising a storage component configured to store a specification of the quota.

7. Communication network arrangement (1600) of claim 6, wherein the storage component is configured to allow configuration of the quota by a third party network component.

8. Communication network arrangement (1600) of any one of claims 1 to 7, wherein the management component (1604) is configured to request from the quota monitoring component (1603) to be notified when the quota has been reached.

9. Communication network arrangement (1600) of claim 8, wherein the management component (1604) is configured to request from the quota monitoring component (1603) to be notified when the quota has been reached by means of a notification service subscription.

10. Communication network arrangement (1600) of any one of claims 1 to 9, comprising a plurality of management components configured receive requests for registration to the network slice or establishment of a session form multiple mobile terminals and further comprising a control component configured to check, in case of a plurality of unanswered requests for registration to the network slice or establishment of a session, whether the requests may be only partially fulfilled because of the quota being reached and, if the requests can only be partially fulfilled, control one or more of the management components to reject a request received by the management components.

11. Communication network arrangement of (1600) claim 10, wherein the control component is configured to select one or more mobile terminals from which the plurality of management components have received requests for registration to the network slice or establishment of a session and to control the one or more of the management components to reject a the requests of the selected one or more mobile terminals.

12. Communication network arrangement (1600) of claim 11, wherein the control component is configured to select the one or more mobile terminals based on an operator policy and/or based on the UE's subscription information indicating the priority ranking of the one or more mobile terminals.

13. Communication network arrangement (1600) of any one of claims 1 to 12, wherein the management component (1604) is configured to reject the request of the mobile terminal (102) by means of transmission of a message to the mobile terminal (102) including a back-off time during which the mobile terminal (102) may not request registration to the network slice or establishment of a session in the network slice.

14. Communication network arrangement (1600) of any one of claims 1 to 13, wherein the quota limits the maximum number of mobile terminals registered in the network slice and/or the maximum number of sessions provided in the network slice for mobile terminals located in a pre-defined geographic sub-area of a coverage area of the network slice and wherein the management component (1604) is configured to reject a request of a mobile terminal (102) for registration to the network slice or establishment of a session in the network slice if the quota has been reached and the mobile terminal (102) is located in the sub-area.

15. A method for handling registration and/or session requests comprising
detecting whether a quota which limits the maximum number of mobile terminals registered in a network slice and/or the maximum number of sessions provided in the network slice has been reached,
notifying a management component (1604) if the quota has been reached and
the management component (1604) rejecting a request of a mobile terminal (102) for registration to the network slice or establishment of a session in the network slice if the quota has been reached.
